# DEMANDE DE BREVET EUROPEEN

(11) **EP 1 852 320 A1**
(43) Date de publication de la demande: **07.11.2007**
(21) Numéro de dépôt: 07300879.9
(22) Date de dépôt: 19.03.2007
(51) Int. Cl.: B60S 1/20, B60S 1/28

(54) **Essuie-glace pour balayage de la surface vitrée d'un pare brise panoramique de véhicule automobile**

(30) Priorité: 30.03.2006 FR 0651101
(71) Demandeur: PEUGEOT CITROËN AUTOMOBILES S.A., 78140 Velizy Villacoublay (FR)
(72) Inventeur: Jeuffe, Gérard, 78580 Bazemont (FR)

(57) **Abrégé**

Essuie glace pour le balayage de la surface vitrée (1) du pare brise panoramique ou de la lunette arrière d'un véhicule automobile, comprenant au moins un balai (2) pivotant muni d'un support pour une raclette comportant une lèvre de balayage principale (4), souple, en contact avec la surface vitrée, ce balai étant entraîné en rotation alternée par un moteur réversible autour d'un premier axe de commande (5) porté par l'habitacle du véhicule, caractérisé en ce qu'il comporte un second axe, déporté latéralement par rapport au premier, propre à commander simultanément la rotation d'un pignon d'entraînement à partir du ou en synchronisme avec le premier axe, ce pignon d'entraînement étant en prise avec un câble de traction (9) se déplaçant à l'intérieur d'une glissière ouverte (10) ménagée dans un rail de guidage (11) fixé à l'habitacle ou à la surface vitrée, ce câble étant relié à l'extrémité d'une lèvre de balayage auxiliaire (7), souple, de longueur constante, en appui sur la surface vitrée, l'extrémité opposée de cette lèvre auxiliaire étant assujettie à un troisième axe (20), porté par l'habitacle.

## Description

La présente invention est relative à un essuie glace pour le balayage de la surface vitrée du pare brise panoramique ou de la lunette arrière d'un véhicule automobile, utilisant au moins un balai entraîné selon un mouvement de rotation alterné en va et vient autour d'un axe fixe porté par l'habitacle du véhicule, ce balai comportant de façon classique une raclette munie d'une lèvre souple se déplaçant au contact de la surface vitrée

On sait que, pour le nettoyage du pare brise ou plus généralement d'une surface vitrée plane ou bombée, délimitée par des côtés frontaux et latéraux pour présenter un contour à profil sensiblement rectangulaire, l'usage d'un ou même de deux balais d'essuie glace rotatifs mutuellement imbriqués, à débattements alternatifs en va et vient, ne permet pas de décrire totalement la surface, laissant hors d'atteinte de la course des balais des zones de la surface plus ou moins grandes non balayées, ce qui peut constituer une gêne notable pour le conducteur du véhicule, notamment dans sa vision latérale vers les bords latéraux du pare brise ou de la lunette arrière.

La présente invention a pour objet un essuie glace perfectionné qui met à profit le mode d'entraînement usuel d'au moins un balai principal, déplaçant sa raclette au contact de la surface vitrée selon un mouvement de va et vient alterné autour d'un axe fixe, pour entraîner un moyen de balayage auxiliaire qui décrit simultanément une zone complémentaire de cette surface, non parcourue par le balai principal.

A cet effet l'essuie glace considéré, comprenant au moins un balai pivotant muni d'un support pour une raclette comportant une lèvre de balayage principale, souple, en contact avec la surface vitrée, ce balai étant entraîné en rotation alternée par un moteur réversible autour d'un premier axe de commande porté par l'habitacle du véhicule, se caractérise en ce qu'il comporte un second axe, déporté latéralement par rapport au premier, propre à commander simultanément la rotation d'un pignon d'entraînement à partir du ou en synchronisme avec le premier axe, ce pignon d'entraînement étant en prise avec un câble de traction se déplaçant à l'intérieur d'une glissière ouverte ménagée dans un rail de guidage fixé à l'habitacle ou à la surface vitrée, ce câble étant relié à l'extrémité d'une lèvre de balayage auxiliaire, souple, de longueur constante, en appui sur la surface vitrée, l'extrémité opposée de cette lèvre auxiliaire étant assujettie à un troisième axe, porté par l'habitacle.

Les déplacements du balai pivotant dus à la rotation alternée du premier axe, réalisant le balayage d'une fraction de la surface vitrée par la lèvre principale, provoquent ainsi simultanément ceux de la lèvre auxiliaire par l'intermédiaire du câble de traction commandé par la rotation du pignon d'entraînement autour du second axe, ce câble, solidarisé d'une extrémité de cette lèvre auxiliaire, se déplaçant à l'intérieur de la glissière ouverte du rail en tirant ou repoussant cette lèvre dont l'extrémité opposée pivote en même temps autour du troisième axe, cette lèvre auxiliaire parcourant une zone complémentaire de la surface vitrée dont l'étendue propre est distincte de celle décrite par la lèvre principale du balai.

De préférence, le câble de traction est maintenu à l'intérieur d'un manchon ajouré délimité par un fil torsadé enroulé sur ce câble et dont les spires équidistantes coopèrent avec une denture prévue sur le pignon d'entraînement.

Avantageusement, la denture du pignon d'entraînement est inclinée sur la direction longitudinale du câble, le fil du manchon étant enroulé sur celui-ci selon une hélice de pas constant.

De préférence également, la liaison de la lèvre auxiliaire avec le câble de traction est réalisée par une pièce surmoulée, montée à coulissement dans la glissière ouverte du rail de guidage.

Selon une caractéristique particulière de l'essuie glace considéré, la lèvre auxiliaire est assujettie au troisième axe de rotation par l'intermédiaire d'un ressort de rappel, solidarisé en bout de l'extrémité de cette lèvre opposée à celle qui est liée au câble de traction, afin de gérer en permanence les déplacements de la lèvre auxiliaire provoqués par ce câble contre la surface vitrée.

Selon une autre caractéristique, le troisième axe de rotation comprend un goujon fixe, porté par l'habitacle et relié au ressort de rappel. Avantageusement, le ressort de rappel est logé dans une gaine de protection.

D'autres caractéristiques d'un essuie glace conforme à l'invention, apparaîtront encore à travers la description qui suit d'un exemple de réalisation, donné à titre indicatif et non limitatif, en référence au dessin annexé sur lequel :
- La Figure 1 est une vue schématique, en perspective, d'un pare brise panoramique de véhicule automobile équipé d'un essuie glace conforme à l'invention.
- La Figure 2 illustre les organes assurant la commande du déplacement du câble de traction solidarisé à une extrémité de la lèvre auxiliaire.
- La Figure 3 est une vue en perspective, à encore plus grande échelle, du pignon d'entraînement du câble de traction.
- La Figure 4 est une vue à plus grande échelle, également en perspective, du ressort de rappel monté à l'autre extrémité de la lèvre de balayage auxiliaire et des moyens de liaison associés à ce ressort.

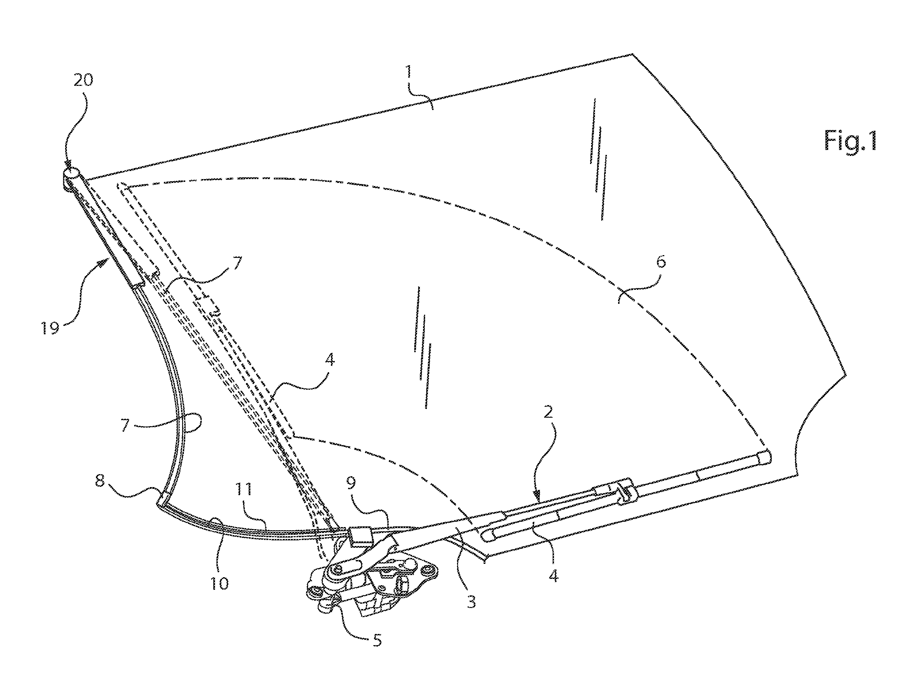

Sur la Figure 1, la référence 1 désigne schématiquement une fraction de la surface vitrée d'un pare brise, notamment à profil panoramique, équipant l'habitacle d'un véhicule automobile (non représenté).

Le nettoyage de cette surface vitrée 1 est réalisé de façon usuelle, par au moins un balai 2 d'essuie glace, le cas échéant par deux balais de ce genre à mouvements alternatifs simultanés et imbriqués l'un dans l'autre.

Chaque balai 2 comporte un bras de support 3 pour une raclette essentiellement constituée par une lèvre principale 4, mince et souple, qui porte sur cette surface vitrée, ce bras étant fixé à une de ses extrémités à un premier axe de commande 5, porté par l'habitacle et entraîné au moyen d'un moteur réversible (non représenté) selon un mouvement de rotation en va et vient continu que cet axe communique ainsi au bras, de telle sorte que la lèvre principale 4 puisse décrire une zone délimitée 6 de la surface 1, bornée sur le dessin par un ensemble de traits mixtes.

La réalisation particulière des moyens qui permettent d'entraîner le bras 3 du balai 2 d'essuie glace autour de l'axe 5 à l'aide du moteur qui lui est associé, n'importe pas directement à l'invention de sorte qu'il n'est pas nécessaire d'en faire ici la description détaillée.

Comme on le constate immédiatement, la zone 6 balayée par la lèvre principale 4 du balai 2 d'essuie glace ne recouvre qu'une fraction de la surface vitrée 1, de telle sorte que le besoin d'assurer un nettoyage complémentaire de cette surface, en dehors de cette zone, notamment au voisinage des côtés latéraux du pare brise, est particulièrement sensible, l'invention permettant d'apporter une solution simple et efficace pour le satisfaire.

Dans ce but, le balai 2 est associé à une lèvre de balayage auxiliaire 7, souple, de longueur constante et en appui sur la surface vitrée 1.

Une première extrémité de cette lèvre auxiliaire 7 est reliée par une pièce surmoulée 8, avantageusement du genre rotule ou autre, à l'extrémité d'un câble de traction 9, logé dans une glissière ouverte 10, ménagée longitudinalement dans un rail de guidage fixe 11, porté par l'habitacle du véhicule ou la surface vitrée 1.

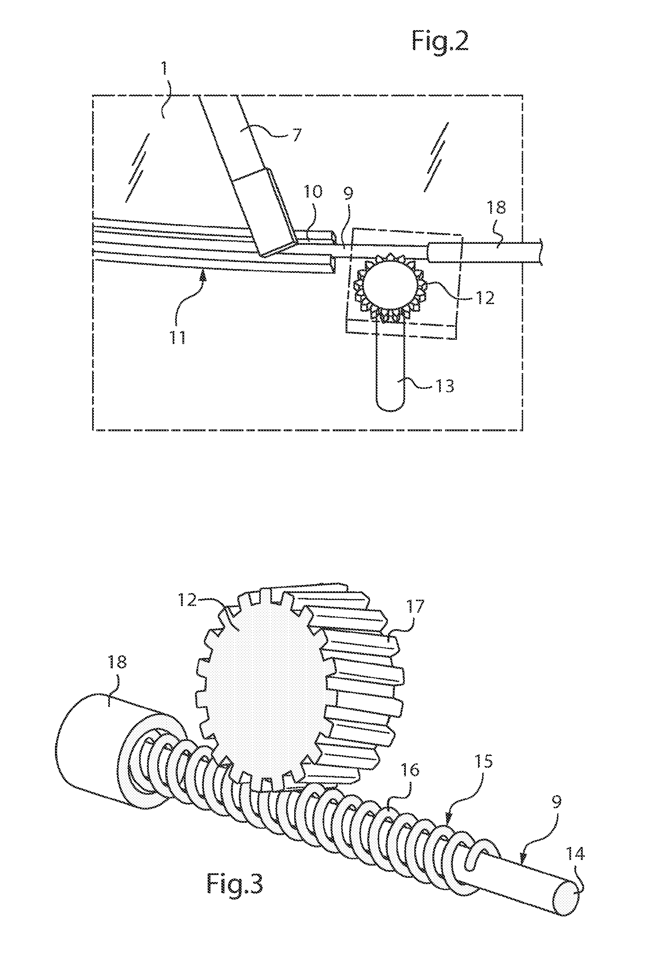

Comme plus particulièrement illustré sur la Figure 2, le câble de traction 9 est agencé pour pouvoir coopérer avec un pignon d'entraînement 12, fixé sur un second axe de commande 13, déporté vis-à-vis du premier axe 5 et qui peut, soit être directement entraîné par ce premier axe de commande de la rotation du balai 2, grâce à un jeu d'engrenages de renvoi (non représenté), monté entre les deux axes pour transmettre le mouvement du premier au second, soit être commandé indépendamment par un moteur indépendant dont le mouvement est synchronisé dans ce cas avec celui du moteur réversible de commande du premier axe assurant l'entraînement en va et vient du balai 2 porté par le bras 3.

Ainsi, lorsque le balai 2 est entraîné dans un sens puis dans l'autre, autour du premier axe 5, avec sa lèvre principale 4 en contact permanent avec la surface vitrée 1 pour décrire la surface 6, le pignon d'entraînement 12 provoque le déplacement du câble 9 à l'intérieur de la glissière ouverte 10 du rail 11, vers la droite ou vers la gauche sur la Figure, dans le sens qui permet d'accommoder simultanément le déplacement du bras 3.

Avantageusement, le câble de traction 9 comporte une âme cylindrique 14 entourée par un manchon 15 formé d'un fil torsadé 16, enroulé en hélice à pas constant sur l'âme 14 et agencé pour pouvoir coopérer avec la denture 17 du pignon d'entraînement 12, laquelle est avantageusement inclinée sur la direction longitudinale du câble pour engrener avec les spires du fil 16 torsadé en hélice et assurer le déplacement du câble 9 dans le sens imposé (Figure 3).

De préférence, le câble 9 est logé à coulissement, avec son manchon 15, à l'intérieur d'une gaine de protection 18.

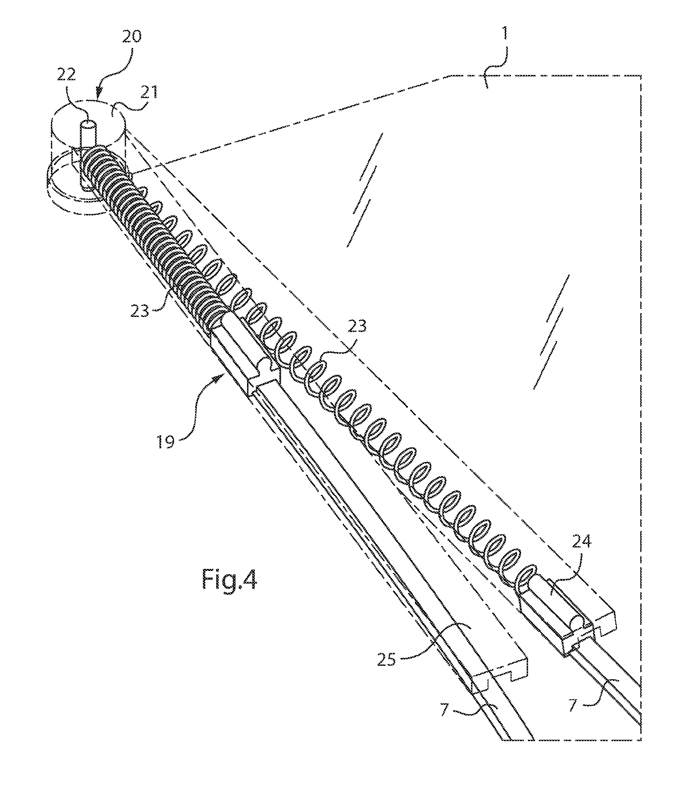

A son extrémité opposée, la lèvre de balayage auxiliaire 7 est reliée par un ensemble de liaison 19 à un troisième axe 20, cet ensemble comportant un pion circulaire 21, apte à pouvoir pivoter sur un goujon fixe 22 porté par l'habitacle (Figure 4).

L'ensemble de liaison 19 se compose de deux éléments liés l'un à l'autre, à savoir un ressort en spirale 23, dont une extrémité est solidarisée du pion circulaire 21 engagé à pivotement sur le goujon 22 et dont l'autre extrémité est fixée sur une pièce d'accrochage 24 avec l'extrémité de la lèvre auxiliaire 7.

Le ressort 23 de l'ensemble de liaison 19 est logé dans une pièce de guidage et de protection 25, en forme de gouttière, solidarisée du pion 21.

Le fonctionnement du dispositif considéré se déduit aisément de la description qui précède :

Lorsque l'essuie glace est mis en marche, par commande du moteur qui assure les mouvements alternatifs du bras 3 portant le balai 2 autour du premier axe 5, la lèvre principale 4 balaye en va et vient la zone 6 de la surface vitrée 1.

Simultanément, le câble 9 provoque le déplacement de la lèvre auxiliaire 7 dont l'extrémité est solidaire de ce câble par la pièce de liaison 8, consécutivement au déplacement de ce câble à l'intérieur de la glissière ouverte 10 du rail de guidage 11 par action du pignon d'entraînement 12 tournant avec le second axe 13, la denture 17 de ce pignon engrenant avec les spires du fil torsadé 16, enroulé en hélice sur l'âme 14 du câble.

Du fait de la coordination des mouvements crées respectivement autour des premier et second axes de commande 5 et 13, correspond ainsi, au cours de chaque période de balayage, à une rotation de la lèvre principale 4 un déplacement vers la droite ou la gauche dans le rail de guidage 11 de la pièce de liaison 8 avec le câble 9, prévue à l'extrémité de la lèvre auxiliaire 7.

Lorsque cette extrémité se déplace vers la droite sur le dessin, la lèvre principale 4 du balai 2 se déplaçant vers la partie basse de la zone 6 sur la Figure 1, l'effort exercé sur la lèvre auxiliaire 7 de longueur constante par le câble 9 qui la tire dans le rail 11 provoque un effort de traction sur le ressort 23 de l'ensemble de liaison 19, lié à l'extrémité opposée de la lèvre par la pièce d'accrochage 24, le troisième axe 20 permettant le léger pivotement de cet ensemble autour du goujon 22 qui en résulte.

Lorsque le balai 2 arrive en fin de course et inverse son mouvement, avec la lèvre principale en bas de la zone 6 sur le dessin, le mouvement s'inverse et le ressort 23 se détend progressivement pour revenir dans sa position initiale en tirant sur la lèvre auxiliaire 7, pendant que l'inversion simultanée du sens de rotation du pignon d'entraînement 12 autour du second axe 13 ramène le câble 9 en position initiale, la pièce de liaison 8 décrivant en sens inverse la glissière ouverte 10 du rail 11.

On réalise ainsi, en utilisant uniquement l'énergie nécessaire pour entraîner la lèvre principale, un mouvement coordonné de la lèvre auxiliaire qui assure simultanément le balayage efficace d'une zone complémentaire de la surface vitrée, le ressort de rappel relié à une extrémité de cette lèvre auxiliaire, dont la longueur reste constante, permettant par son léger pivotement et son extension limitée de gérer les déplacements de celle-ci, en translation et en déplacement latéral, tout en la maintenant en permanence au contact de cette surface.

Bien entendu, il va de soi que l'invention ne se limite pas au seul exemple de réalisation décrit ci-dessus et représenté aux dessins annexés ; elle en embrasse au contraire toutes les variantes.

## Revendications

1. - Essuie glace pour le balayage de la surface vitrée (1) du pare brise panoramique ou de la lunette arrière d'un véhicule automobile, comprenant au moins un balai (2) pivotant muni d'un support pour une raclette comportant une lèvre de balayage principale (4), souple, en contact avec la surface vitrée, ce balai étant entraîné en rotation alternée par un moteur réversible autour d'un premier axe de commande (5) porté par l'habitacle du véhicule, **caractérisé en ce qu'**il comporte un second axe (13), déporté latéralement par rapport au premier, propre à commander simultanément la rotation d'un pignon d'entraînement (12) à partir du ou en synchronisme avec le premier axe, ce pignon d'entraînement étant en prise avec un câble de traction (9) se déplaçant à l'intérieur d'une glissière ouverte (10) ménagée dans un rail de guidage (11) fixé à l'habitacle ou à la surface vitrée, ce câble étant relié à l'extrémité d'une lèvre de balayage auxiliaire (7), souple, de longueur constante, en appui sur la surface vitrée, l'extrémité opposée de cette lèvre auxiliaire étant assujettie à un troisième axe (20), porté par l'habitacle.

2. - Essuie glace selon la revendication 1, **caractérisé en ce que** le câble de traction (9) est maintenu à l'intérieur d'un manchon ajouré (15) délimité par un fil torsadé (16) enroulé sur ce câble et dont les spires équidistantes coopèrent avec une denture (17) prévue sur le pignon d'entraînement (12).

3. - Essuie glace selon la revendication 2, **caractérisé en ce que** la denture (17) du pignon d'entraînement (12) est inclinée sur la direction longitudinale du câble (9), le fil (16) du manchon (15) étant enroulé sur celui-ci selon une hélice de pas constant.

4. - Essuie glace selon l'une quelconque des revendications 1 à 3, **caractérisé en ce que** la liaison de la lèvre auxiliaire (7) avec le câble de traction (9) est réalisée par une pièce surmoulée (8), montée à coulissement dans la glissière ouverte (10) du rail de guidage (11).

5. - Essuie glace selon la revendication 1, **caractérisé en ce que** la lèvre auxiliaire (7) est assujettie au troisième axe de rotation (20) par l'intermédiaire d'un ressort de rappel (23), solidarisé en bout de l'extrémité de cette lèvre opposée à celle qui est liée au câble de traction (9).

6. - Essuie glace selon la revendication 5, **caractérisé en ce que** le troisième axe de rotation (20) comprend un goujon fixe (22), porté par l'habitacle et relié au ressort de rappel (23).

7. - Essuie glace selon l'une des revendications 5 ou 6, **caractérisé en ce que** le ressort de rappel (23) est logé dans une gaine de protection (25).
